# DEMANDE DE BREVET EUROPEEN

(11) **EP 0 945 058 A1**
(43) Date de publication de la demande: **29.09.1999**
(21) Numéro de dépôt: 99400285.5
(22) Date de dépôt: 08.02.1999
(51) Int. Cl.: A01K 1/015

(54) **Plancher à caillebotis pour bâtiment d'élevage d'animaux**

(30) Priorité: 26.03.1998 FR 9803763
(71) Demandeur: Aco Produits Polymères, 27940 Notre Dame de L'Isle (FR)
(72) Inventeur: Miquel, Joseph, 27950 Saint Pierre d'Autils (FR); Ollivier, Didier, 27930 Aviron (FR)
(74) Mandataire: Bezault, Jean

(57) **Abrégé**

Un plancher (10) pour un bâtiment d'élevage d'animaux comprend une multiplicité de poutres parallèles (30) supportant des caillebotis (32), deux tubes sensiblement parallèles (22) s'étendant perpendiculairement aux poutres et munis chacun de moyens d'attache (26), disposés espacés le long des tubes et propres à recevoir les extrémités des poutres (30) de manière ajustable, ainsi que deux appuis horizontaux (24) sensiblement parallèles disposés en des endroits choisis à l'intérieur du bâtiment. Les deux tubes sont propres à reposer respectivement sur les deux appuis horizontaux en sorte que le plancher peut être relevé par soulèvement de l'un des tubes alors que l'autre tube pivote sur l'un des appuis horizontaux.

## Description

L'invention concerne un plancher à caillebotis destiné à être utilisé dans un bâtiment occupé par des animaux d'élevage, en particulier par des porcs.

On connaît déjà des planchers à caillebotis du type comprenant une multiplicité de poutres parallèles supportant des caillebotis. Ces poutres sont réalisées dans un matériau de synthèse et sont coupées à la longueur voulue pour s'adapter aux dimensions de la case d'élevage dans lequel le plancher doit être implanté. Les extrémités des poutres sont ensuite disposées sur des supports appropriés, disposés espacés à l'intérieur du bâtiment, puis des caillebotis sont mis en place sur les poutres. Ceci permet de réaliser un plancher à structure ouverte pour laisser passer les déjections des animaux, qui sont recueillies dans une fosse sous-jacente.

Il existe aussi des planchers d'un type voisin, formés de poutres en béton et de caillebotis en béton ou en matière plastique.

Ces planchers connus ne peuvent être ni soulevés ni démontés facilement, si bien que le nettoyage de la fosse est malaisé.

Par ailleurs, on connaît des planchers relevables qui possèdent un cadre métallique formé d'une structure mécano-soudée supportant des caillebotis.

Ce cadre métallique doit être construit avec des dimensions précises adaptées à celles du bâtiment auquel il est destiné, ce qui augmente le coût de fabrication et pose des problèmes de transport. En outre ce plancher est relativement lourd, ce qui rend son relevage difficile.

L'invention a notamment pour but de remédier aux inconvénients précités.

Elle vise en particulier à procurer un plancher du type défini précédemment qui permet un accès aisé à la fosse sous-jacente, sans démontage du plancher.

C'est encore un but de l'invention de procurer un tel plancher qui peut être facilement réalisé aux dimensions voulues, et cela directement sur son site d'implantation.

Encore un autre but de l'invention est de procurer un tel plancher qui possède une structure légère, facilitant son relevage, tout en étant résistante mécaniquement et facile à nettoyer.

Elle propose à cet effet un plancher à caillebotis du type défini en introduction, lequel comprend deux tubes sensiblement parallèles s'étendant perpendiculairement aux poutres et munis chacun de moyens d'attache, disposés espacés le long des tubes et propres à recevoir les extrémités des poutres de manière ajustable, ainsi que deux appuis horizontaux sensiblement parallèles disposés en des endroits choisis à l'intérieur du bâtiment, et dans lequel les deux tubes sont propres à reposer respectivement sur les deux appuis horizontaux en sorte que le plancher peut être relevé par soulèvement de l'un des tubes alors que l'autre tube pivote sur l'un des appuis horizontaux.

On procure ainsi un plancher à caillebotis qui peut être facilement relevé en soulevant l'un des tubes par des moyens de levage appropriés, alors que l'autre tube pivote sur l'appui horizontal qui le supporte.

De plus ce plancher peut être adapté facilement aux dimensions voulues en coupant les tubes et les poutres aux longueurs respectives voulues en fonction des dimensions de la case d'élevage à équiper.

Les appuis horizontaux peuvent être prévus, par exemple, soit le long de deux parois opposées du bâtiment, soit transversalement à ces parois.

D'autres caractéristiques complémentaires ou alternatives de l'invention sont énoncées ci-après :
- Chacun des tubes est de forme cylindrique et réalisé en matériau résistant, avantageusement en métal ou en matériau de synthèse.
- Les moyens d'attache comprennent une pluralité d'étriers fixés sur chacun des tubes avec un intervalle axial choisi correspondant à l'intervalle existant entre les poutres, et chaque étrier comporte un logement conformé pour recevoir à emboîtement une extrémité d'une poutre.
- Les étriers sont soudés sur les tubes.
- Les moyens d'attache comprennent une pluralité d'attaches comportant chacune une bague propre à être emmanchée autour d'un tube et munie d'une protubérance définissant un logement conformé pour recevoir à emboîtement une extrémité d'une poutre.
- Les attaches sont formées chacune en une matière plastique, en particulier en un polyamide.
- Les moyens d'attache comprennent des encoches formées directement dans un tube à intervalles donnés.
- Les deux appuis horizontaux comprennent deux séries de consoles mutuellement espacées propres à être fixées sur des parties du bâtiment.
- Chacune des consoles comporte une embase propre à être fixée sur une partie du bâtiment et un appui en porte-à-faux solidaire de la console et procurant une surface d'appui pour un tube.
- L'appui en porte-à-faux est muni d'une butée à l'opposé de l'embase.
- Chacune des consoles est réalisée d'une seule pièce par moulage, en particulier en béton de résine ou en matière plastique injectée.
- Chacune des consoles est réalisée d'une seule pièce par découpage et pliage d'une pièce métallique, avantageusement en acier inoxydable.
- Les poutres ont une âme en forme générale de I et sont réalisées en une matière de synthèse, en particulier en une résine renforcée par des fibres de verre, et sont recoupables à la longueur désirée.

Dans la description qui suit donnée seulement à titre d'exemple, on se réfère aux dessins annexés sur lesquels :
- la figure 1 est une vue partielle en coupe d'un bâtiment d'élevage équipé d'un plancher selon l'invention représenté en position d'utilisation ;
- la figure 2 est une vue partielle de dessus correspondant à la fisure 1 ;
- la figure 3 est une vue analogue à la figure 1, dans laquelle le plancher est représenté en position relevée ;
- la figure 4 est une vue partielle en coupe transversale d'un tube équipé d'une attache réalisée sous la forme d'un étrier ;
- la figure 5 est une vue partielle en coupe selon la ligne V-V de la figure 4 et représentant en outre une poutre supportée par l'étrier ;
- la figure 6 est une vue de face d'une console selon une forme de réalisation de l'invention ;
- la figure 7 est une vue en perspective de la console de la figure 6 ;
- la figure 8 est une vue en perspective d'une attache réalisée sous la forme d'un bague ; et
- la figure 9 est une vue en perspective d'une console dans une autre forme de réalisation de l'invention.

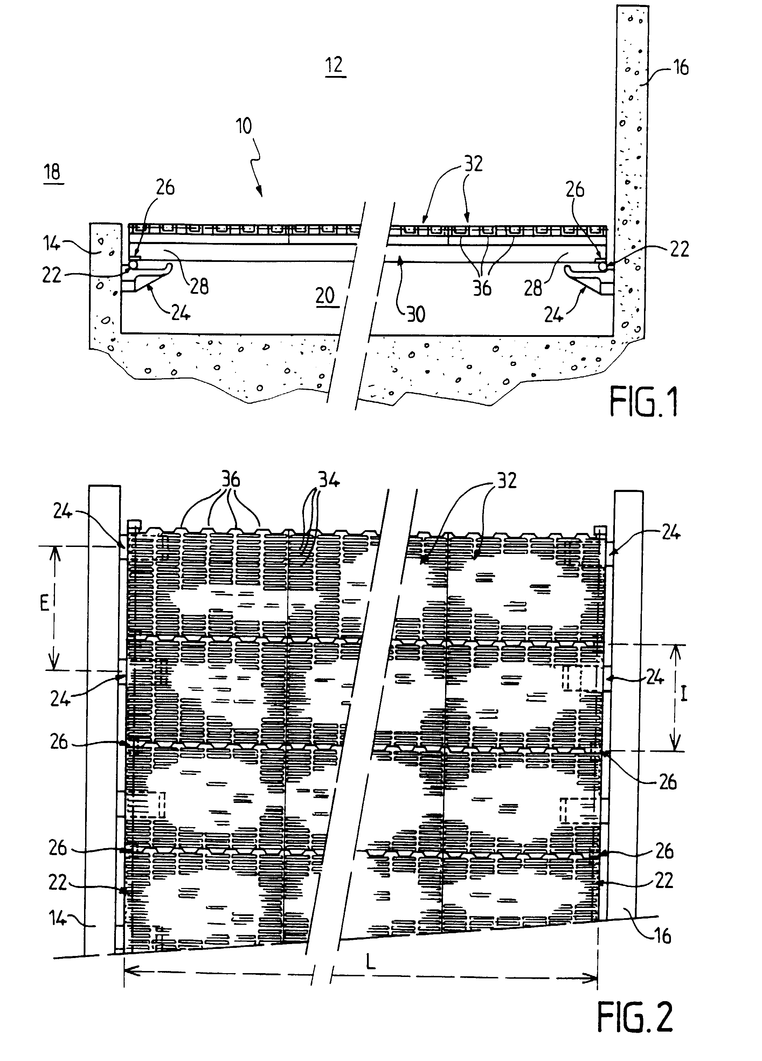

On se réfère tout d'abord aux figures 1 et 2 qui représentent un plancher à caillebotis 10 installé dans une case 12 d'un bâtiment d'élevage d'animaux, cette case étant délimitée entre deux parois opposées 14 et 16 du bâtiment. Dans l'exemple, la paroi 14 est située près d'un couloir 18, alors que la paroi 16 constitue un mur. En dessous du plancher 10 est aménagée une fosse 20 propre à recevoir les déjections des animaux se trouvant dans la case 12.

Le plancher 10 comprend deux tubes sensiblement parallèles 22 constitués dans l'exemple de tubes creux cylindriques, de section circulaire, formés avantageusement en acier inoxydable. Ces deux tubes sont disposés horizontalement et viennent reposer sur deux séries de consoles 24, l'une des séries étant fixée sur la paroi 14 et l'autre sur la paroi 16. Les consoles 24 de chaque série ménagent entre elles un espacement E (figure 2) qui est fonction des dimensions et du poids du plancher et des animaux à supporter. Généralement, cet espacement E est compris entre 50 et 100 cm.

Les tubes 22 sont coupés à la longueur voulue en fonction de la dimension de la case 12, parallèlement aux parois 14 et 16. Ces tubes 22 sont munis chacun à des intervalles donnés I (figure 2) d'attaches 26 servant à supporter, de manière ajustable, les extrémités respectives 28 de poutres 30 qui s'étendent perpendiculairement aux tubes 22.

Les poutres 30 sont formées dans un matériau de synthèse, avantageusement en une résine renforcée de verre, en particulier sous forme de fils. Ces poutres sont coupées chacune à une longueur voulue L (figure 2) qui est sensiblement inférieure à la dimension de la case 12, telle que délimitée intérieurement entre les parois 14 et 16.

L'intervalle I entre les poutres 30 est choisi pour correspondre à la dimension en largeur de caillebotis 32 disposés entre les poutres.

Ces caillebotis 32 ont chacun une forme générale rectangulaire et ménagent une multiplicité de fentes ou interstices 34 (figure 2) destinés à laisser passer les déjections des animaux vers la fosse 20.

Les caillebotis 32 sont munis, sur deux côtés opposés correspondant à leur longueur, de pattes de clipsage 36 servant à leur fixation sur l'extrémité supérieure des poutres 30. Ces caillebotis sont formés avantageusement par moulage d'une matière plastique telle que du polypropylène.

Ces caillebotis peuvent être éventuellement redécoupés pour s'adapter aux dimensions de la case 12 considérée.

On forme ainsi un plancher à caillebotis dont les dimensions peuvent être adaptées à celle de la case 12 en coupant les tubes 22 et les poutres 30 aux longueurs voulues, et en disposant sur les poutres un nombre approprié de caillebotis 32.

On comprendra que le plancher 10 repose simplement et librement sur les consoles 24 ce qui permet de l'enlever facilement pour accéder à la fosse 20 en vue de son nettoyage.

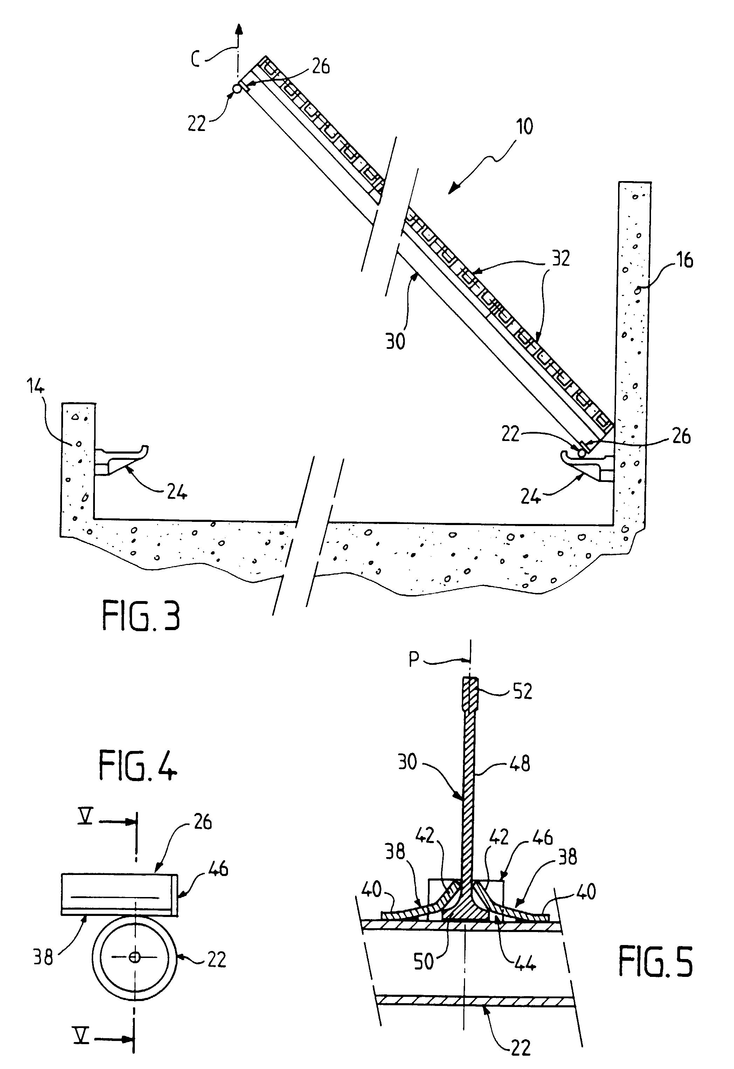

Notamment, le plancher 10 peut être facilement relevé par soulèvement du tube 22 situé du côté de la paroi 14 (côté couloir) et pivotement autour du tube 22 situé près de la paroi 16 (côté mur). Il suffit pour cela d'attacher un ou plusieurs câbles C (figure 3) sur le tube 22 et d'exercer une traction vers le haut pour faire pivoter le plancher et l'amener dans une position inclinée comme représenté sur la figure 3. Au cours de ce mouvement, le tube 22 situé près de la paroi 16 pivote sur lui même et se déplace également en translation sur la console 24, perpendiculairement à l'axe du tube.

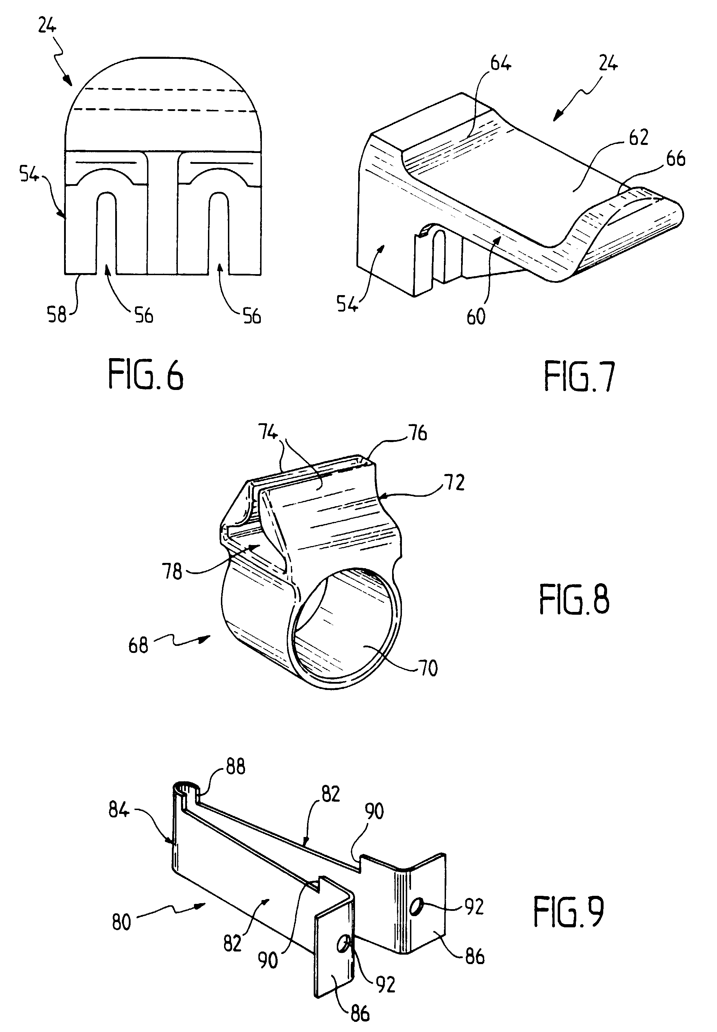

On se réfère maintenant aux figures 4 et 5 pour décrire l'une des attaches 22 précitées. Cette attache est réalisée sous la forme d'un étrier métallique, avantageusement en acier inoxydable, soudé directement sur un tube 22. Cet étrier comprend deux ailes 38 disposées symétriquement par rapport à un plan P (figure 5) s'étendant perpendiculairement à l'axe du tube. Chacune des ailes 38 comprend une extrémité 40 soudée sur le tube et une extrémité libre 42, disposée en regard et à distance de l'extrémité libre homologue de l'autre aile 38. Les ailes 38 ménagent ainsi entre elles un logement conformé 44 ayant sensiblement la forme transversale d'un triangle. Ce logement 44 est limité transversalement par une plaque d'extrémité 46, de forme rectangulaire, qui est soudé aux ailes 38 et qui constitue une butée pour l'introduction de l'extrémité 28 d'une poutre 30.

La poutre 30 (figure 5) présente, en section droite, la forme générale d'un I avec une âme 48 aboutissant, d'un côté, à un pied 50 propre à être reçu dans le logement 44 précité et, du côté opposé, à une tête 52 propre à recevoir les pattes de clipsage 36 des caillebotis 32.

On se réfère maintenant aux figures 6 et 7 pour décrire une console 24. Cette dernière est réalisée d'une seule pièce en un matériau de synthèse, avantageusement en béton de résine, ce matériau étant avantageux en raison de sa facilité de moulage, de sa résistance mécanique et de ses facilités de nettoyage.

La console 24 comprend une embase 54 propre à être fixée sur la paroi 14 ou 16 du bâtiment. Cette embase est munie de deux fentes 56 qui la traversent de part-en-part et qui débouchent sur une face inférieure 58 de l'embase. Ces fentes sont destinées à permettre le passage de moyens de fixation (non représentés), tels que des vis ou analogues, avantageusement en acier inoxydable.

En outre, la console 24 comporte un appui 60 en porte-à-faux qui s'étend perpendiculairement à l'embase et qui procure une surface d'appui 62 qui est horizontale dans la position d'utilisation de la console. Cette surface d'appui, de forme générale rectangulaire, est délimitée par deux butées opposées : une butée 64 du côté de l'embase 54 et une butée 66 située à l'opposé de l'embase 54. Il en résulte que le tube 22 peut pivoter sur la surface d'appui 62 et se déplacer sur celle-ci, ce déplacement étant limité par les butées 64 et 66.

On se réfère maintenant à la figure 8 pour décrire un autre type d'attache. Dans cet exemple, l'attache 68 comprend une bague 70 formant fourreau, propre à être emmanchée autour d'un tube 22. Cette bague 70 est munie d'une protubérance 72 comportant deux ailes 74 espacées l'une de l'autre et rattachées à une paroi 76 formant butée. Les ailes 74 et la paroi 76 délimitent conjointement un logement conformé 78 de forme adaptée à la poutre 30. Le logement 78 présente une section transversale ayant sensiblement la forme d'un T inversé pour l'emboîtement d'une extrémité de poutre dans une direction orthogonale à l'axe de la bague.

L'attache 68 est avantageusement formée en une matière plastique, en particulier du type polyamide. Ainsi, il suffit d'emmancher sur chacun des tubes 22 un nombre voulu de bagues et de les espacer les unes des autres avec des intervalles I, pour recevoir les extrémités des poutres.

On se réfère maintenant à la figure 9 pour décrire une autre console 80 susceptible de jouer le même rôle qu'une console 24 précitée. Dans l'exemple, la console 80 est réalisée d'une seule pièce par découpage et pliage d'une pièce métallique, avantageusement en acier inoxydable. La console 80 comprend deux branches divergentes 82 qui, à une extrémité, sont reliées par une partie 84 coudée en U et, à leur autre extrémité, sont repliées pour former des pattes d'appui 86. La partie coudée 84 dépasse vers le haut pour former une butée 88, tandis que les branches 82 ménagent des butées 90, à proximité des pattes 86. Ces dernières sont munies chacune d'un trou 92 pour le passage d'une vis de fixation ou analogue. Les pattes 86 servent ainsi d'embase et les branches 82 d'appui en porte-à-faux.

Bien entendu, l'invention n'est pas limitée aux formes de réalisation décrites précédemment à titre d'exemple et s'étend à d'autres variantes.

Ainsi, chacun des tubes pourrait présenter une section cylindrique non circulaire et être formé en un matériau de synthèse, par exemple en un matériau composite tel qu'une résine renforcée de fibres de verre, en PVC armé, etc.

Egalement, la structure des moyens d'attache est susceptible de nombreuses variantes. Il est envisageable, en particulier, de réaliser les moyens d'attache par des encoches formées directement dans un tube à des intervalles donnés.

De même, la structure des appuis horizontaux est susceptible de nombreuses variantes. Ces appuis pourraient être formés directement dans les parois du bâtiment, en particulier sous la forme de feuillures en maçonnerie, ou encore être portés par des poteaux ancrés au sol. Il est possible aussi de disposer les appuis transversalement à des parois du bâtiment, par exemple dans le cas où ce dernier ne comporte pas de couloir.

L'invention procure ainsi un plancher à caillebotis qui peut être relevé facilement pour faciliter l'entretien de bâtiments d'élevage qui conviennent à différents types d'animaux, notamment les porcs.

## Revendications

1. Plancher à caillebotis pour bâtiment d'élevage d'animaux, comprenant une multiplicité de poutres (30) parallèles supportant des caillebotis (32),
caractérisé en ce qu'il comprend deux tubes sensiblement parallèles (22) s'étendant perpendiculairement aux poutres (30) et munis chacun de moyens d'attache (26 ; 68), disposés espacés le long des tubes et propres à recevoir les extrémités (28) des poutres (30) de manière ajustable, ainsi que deux appuis horizontaux (24 ; 80) sensiblement parallèles disposés en des endroits choisis à l'intérieur du bâtiment, et en ce que les deux tubes (22) sont propres à reposer respectivement sur les deux appuis horizontaux en sorte que le plancher (10) peut être relevé par soulèvement de l'un des tubes (22) alors que l'autre tube pivote sur l'un des appuis horizontaux.

2. Plancher selon la revendication 1, caractérisé en ce que chacun des tubes (22) est de forme cylindrique et réalisé en un matériau résistant, avantageusement en métal ou en matériau de synthèse.

3. Plancher selon l'une des revendications 1 et 2, caractérisé en ce que les moyens d'attache comprennent une pluralité d'étriers (26) fixés sur chacun des tubes (22) avec un intervalle axial choisi (I) correspondant à l'intervalle existant entre les poutres (30) et en ce que chaque étrier comporte un logement conformé (44) pour recevoir à emboîtement une extrémité (28) d'une poutre (30).

4. Plancher selon les revendications 2 et 3, prises en combinaison, caractérisé en ce que les étriers (26) sont soudés sur les tubes (22).

5. Plancher selon l'une des revendications 1 et 2, caractérisé en ce que les moyens d'attache comprennent une pluralité d'attaches (68) comportant chacune une bague (70) propre à être emmanchée autour d'un tube (22) et munie d'une protubérance (72) définissant un logement (78) conformé pour recevoir à emboîtement une extrémité (28) d'une poutre (30).

6. Plancher selon la revendication 5, caractérisé en ce que les attaches (68) sont formées chacune en une matière plastique, en particulier en un polyamide.

7. Plancher selon l'une des revendications 1 et 2, caractérisé en ce que les moyens d'attache comprennent des encoches formées directement dans un tube à intervalles donnés.

8. Plancher selon l'une des revendications 1 à 7, caractérisé en ce que les deux appuis horizontaux comprennent deux séries de consoles (24 ; 80) mutuellement espacées propres à être fixées sur des parties (14 ; 16) du bâtiment.

9. Plancher selon la revendication 8, caractérisé en ce que chacune des consoles (24 ; 80) comporte une embase (54 ; 86) propre à être fixée sur une partie (14 ; 16) du bâtiment et un appui en porte-à-faux (60 ; 82) solidaire de la console et procurant une surface d'appui pour un tube.

10. Plancher selon la revendication 9, caractérisé en ce que l'appui en porte-à-faux (60 ; 82) est muni d'une butée (66 ; 88) à l'opposé de l'embase (54 ; 86).

11. Plancher selon l'une des revendications 9 et 10, caractérisé en ce que chacune des consoles est réalisée d'une seule pièce par moulage, en particulier en béton de résine ou en matière plastique injectée.

12. Plancher selon l'une des revendications 9 et 10, caractérisé en ce que chacune des consoles (80) est réalisée d'une seule pièce par découpage et pliage d'une pièce métallique, avantageusement en acier inoxydable.

13. Plancher selon l'une des revendications 1 à 12, caractérisé en ce que les poutres (30) ont une âme (48) en forme générale de I et sont réalisées en une matière de synthèse, en particulier en une résine renforcée par des fibres de verre, et sont recoupables à la longueur désirée.
